# EUROPEAN PATENT APPLICATION

(11) **EP 3 492 284 A1**
(43) Date of publication of application: **05.06.2019**
(21) Application number: 17204664.1
(22) Date of filing: 30.11.2017
(51) Int. Cl.: B60C 11/24, B60C 19/08

(54) **PNEUMATIC TIRE TREAD WITH WEAR INDICATION MEANS**

(71) Applicant: Nexen Tire Corporation, Gyeongsangnam-Do (KR)
(72) Inventor: Schlüfter, Matthias, 65439 Flörsheim am Main (DE); Hoelzel, Michael, 64572 Büttelborn (DE); Steiner, Uwe, 63796 Kahl am Main (DE); Knispel, Oliver, 63571 Gelnhausen (DE); Wildgrube, Axel, 64832 Babenhausen (DE)
(74) Representative: Tergau & Walkenhorst Patentanwälte PartGmbB

(57) **Abstract**

Pneumatic tire (2), comprising a tread (6) with at least one layer with a tread color, a belt structure (10) and a carcass (14), further comprising at least one tread wear indicator (50, 56, 58, 100, 102, 104, 130, 132, 134), whereby said at least one tread wear indicator (50, 56, 58, 100, 102, 104, 130, 132, 134) has at least partially a different tread wear indicator color than the surrounding tread (6) and extends radially outwards from said belt structure (10) or from a textile layer (4) into said tread (6), whereby said tread wear indicator (50, 56, 58, 100, 102, 104, 130, 132, 134) is at least partially built of an electrically conducting material.

## Description

### Field of the invention

The invention relates to a pneumatic tire. It especially relates to a tire with a tread wear indicator.

### Background of the invention

As a tire tread wears, the groove depth is reduced; when it is reduced, the tire is not able anymore to channel away water which makes it unsafe to continue driving with the tire. Thus there are often legal requirements that require a certain minimum groove depth for an admissible tire.

When a tire wears, the wear status usually is not easily visible to the driver. Typically, recognizing the wear status is inconvenient and difficult for the driver since the wear status is not easily recognizable on the tire. When the wear status is finally tested by the driver, the result can be that the tire is overdue and should not have been used already for some time.

In order to more easily let the driver assess the wear state of the tire, it is known to equip the tire with a tread wear indicator with a color different than the color of the tire tread. In this way, just looking at the tire yields the necessary information on the wear status of the tire tread.

The EP 1 870 260 A1 describes a pneumatic tire with a tread indicator which has a color different from the tread color and which comprises a material strip being inclined with respect to the tread surface.

The aim of the present invention is to provide a tire tread with a tread indicator which additionally reduces the electrostatic charging of the tire tread.

### Summary of the invention

The invention therefore relates to a Pneumatic tire, comprising a tread with tread color, a belt structure and a carcass, further comprising at least one tread wear indicator, whereby the at least one tread wear indicator has a different tread wear indicator color than the surrounding tread and extends radially outwards from the belt structure or a textile layer into the tread, whereby the tread wear indicator is at least partially built of an electrically conducting material.

Dependent claims refer to preferred embodiments of the invention.

The invention is based on the consideration that a tread wear indicator is an important component in a tire since it can prevent damage to the tire and possibly critical situations of the driver due to a worn tire that does not provide enough grip or blows up. Another important element is a device which can dissipate charges that built up on the tire or the rim to the road, thereby preventing damage to electrical components in the vehicle and possibly the driver. The incorporation of both these elements during the manufacturing of the tire needs a strong digression from normal tread manufacturing since for both cases additional materials need to be embedded into the tread. Especially if several tread wear indicators and charge dissipating elements are planned to be incorporated into the tread, this procedure becomes very cumbersome. Also the properties of the tread can be altered in an undesired way.

Applicant has found that a tread wear indicator which has a different color than the surrounding tread and thereby is easily visible by eye and the dissipating of charges can be combined in one single element which is integrated into the tread. Applicant has found that materials are available which can provide both properties, namely electrical conductivity and a signaling or easy recognizable color. Due to this combination, the tread has to be altered only on a few locations during the manufacturing process. The tread is in this way suitable for mass production since in a single production step, tread and indicator can be produced.

"Groove" denotes an elongated void area in a tread which may extend at least partially circumferentially or laterally about the tread in a straight, curved, or zigzag manner. Circumferentially and laterally extending grooves sometimes have common portions and may be classified as "wide" or "narrow". A "narrow groove" has preferably a width greater than a snipe but less than or equal to about 4.0 mm. A "wide groove" has preferably a width greater than about 4.0 mm.

"Block" means an at least partially circumferentially extending strip of rubber of the tread which is defined by at least one circumferential groove and either a second circumferential groove or a lateral edge, wherein the strip is not divided by full depth grooves. A block can comprise a rib or a shoulder block of the tire tread. A block is arranged at least at one side adjacent to a groove.

"Radial" and "radially" are used to indicate directions radially toward or away from the symmetry axis of the tread, which corresponds to the rotation axis of a mounted tire with such a tread.

The tread color also especially comprises a black color or dark grey colors and typical tread colors which stem from the ingredients of the compound used. The tread in preferred embodiments as described below comprises one or several grooves, which especially at least partially are running circumferentially along the tread. The tread preferably comprises at least one groove. It can comprise one or more grooves and/or one or more ribs.

In other alternative embodiments, the tread can comprise patterns of recesses which can have various orientations with respect to the tread.

Preferably, the electrically conducting or electrically conductive material is a material with a maximal resistance of 108 Ω, especially as specified in VDE 0303, Teil 30, DIN IEC 934; WdK 110, page 3 .

The textile layer is preferably made of polyamide and/or nylon inner material and comprises an electrically conductive material surrounding the inner material which is especially polyamide, especially nylon. The term "textile layer" encompasses both the inner material as well as the conductive material. The textile layer can comprise one or several layers with respectively an inner material and a surrounding conductive material.

"Radially inner" layer means that when looking in a radial direction from the symmetry axis of the tread, this layer is more close to the axis than a "radially outer layer". Symmetry axis means that the overall tire tread is essentially rotationally symmetric around this axis while the detailed structure of ribs and blocks needs not be symmetric with respect to this axis.

Preferably, the tire tread indicator extends from said belt structure or from an (additional) textile layer to the surface of said tread. This is preferably realized in an unworn state of the tire. In this case, the discharging function of the tread wear indicator is active from the beginning of the life time of the tire until the tire gets disposed. The invention therefore relates to a pneumatic tire, comprising a tread with at least one layer with a tread color, a belt structure and a carcass, further comprising at least one tread wear indicator, whereby the at least one tread wear indicator has at least partially a different tread wear indicator color than the surrounding tread and is electrically conductive connected to the belt structure and/or a radially inner electrically conductive structure.

The tread wear indicator preferably comprises a bottom part radially extending from the belt structure or a textile layer into the tread and a top part extending from the bottom part radially further into the tread. Preferably, the top part and/or the bottom part have a color which is easily recognizable and which differs considerably from the color of the surrounding tread material. Both parts are made of an electrically conductive material. The two-part structure of the tread wear indicator allows issuing information on the current wear situation in a two-stage process. As way of example, the upper or top part can have essentially a green color and serves a a first indication that the tread has started to wear. The lower or bottom part preferably has a red or red-like color, thereby indicating that the wear has progressed so much that the depth of the respective groove has lowered to such an extent that the tire should be changed.

The bottom part advantageously has an essentially trapezoidal shape. "Shape" hereby denotes here and for the other parts the cross section of the corresponding part along a cut through the tread.

In another preferred variant, the bottom part has an essentially rectangular shape.

In still another preferred variant, the bottom part has an essentially ellipsoidal shape.
The top part preferably has an essentially rectangular shape. The tread color preferably is essentially black

Preferably, the tread wear indicator has a tread wear indicator color which is easily distinguishable from said tread color, which means that by the naked eye, these two colors can be distinguished by a user with normal vision immediately and without additional means.

Preferably, the tread wear indicator color is of the group: yellow, orange, red.

The tread wear indicator preferably has a width of 1-10 mm, especially 2-5 mm.

The tread wear indicator is, preferably essentially, made of a material which enables its dual function, namely to allow a discharge of charges to the road and to indicate the wear-state of the tread. The material preferably is a colored, conductive compound comprising filler characteristics with pigments.

Advantageously, the tread comprises least one rib, whereby the tread wear indicator is arranged in this rib.

Preferably, at least one shoulder block is provided in the tread, whereby the tread wear indicator is arranged in this shoulder block. The tread preferably comprises at least two layers.

The advantages of the invention are especially as follows. The safety is increased since the tread indicator is clearly and easily visible. The driver will easily recognize if the maximum lifetime of the tire has been reached. At the same time, electrical charges are dissipated from the respective tire, reducing risks of damage of the electrical equipment and also the safety of the driver.

### Brief description of the drawings

Further features and advantages of the present invention shall become clearer from the following detailed description of some of its preferred embodiments, made with reference to the attached schematic drawings and given as an indication and not for limiting purposes.

In particular, the attached drawings are included to provide a further understanding of the invention and are incorporated in and constitute a part of this specification. The drawings together with the description explain the principles of the invention. In the drawings, corresponding characteristics and/or components are identified by the same reference numbers. In these drawings:
- FIG. 1: shows a cut through a pneumatic tire in a first preferred embodiment;
- FIG 2: shows a cut through a pneumatic tire in a second preferred embodiment;
- FIG. 3: shows a cut through a pneumatic tire in a third preferred embodiment; and
- FIG. 4: shows a cut through a pneumatic tire in a fourth preferred embodiment.

Identical parts are labeled with the same reference numbers.

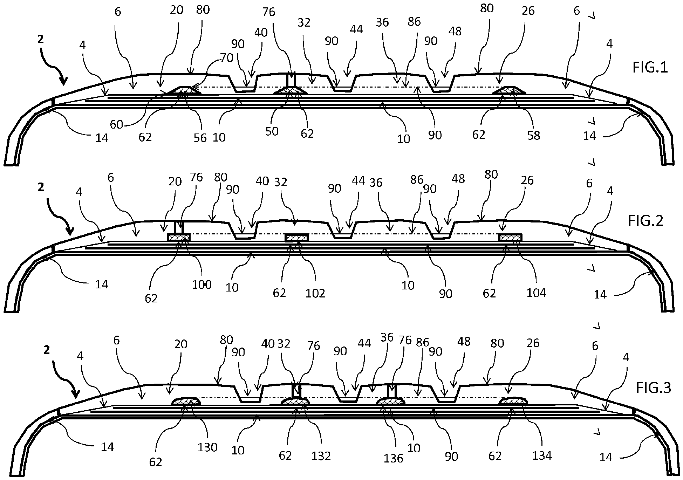

A pneumatic tire 2 in a first preferred embodiment is shown in FIG. 1. It comprises a tire tread 6, a belt structure 10 and a carcass 14. Tread 2 comprises two shoulder blocks 20, 26 and two ribs 32, 36. Between shoulder block 20 and rib 32, a first groove 40 is formed. Between ribs 32, 36, a second groove 44 is formed. Between rib 36 and shoulder block 26, a third groove 48 is formed. The tread 6 according to FIGs. 1-3 preferably comprises at least one groove 40. It can comprise one or more grooves 40 and/or one or more ribs 32, 36.

The pneumatic tire 2 is built to simultaneously provide a reliable indication of the tread wear status and to prevent a buildup of electric charges on the tire. This is achieved by three tread wear indicators 50, 56, 58 which are arranged within tire tread 6. Tread wear indicator 50 has a bottom part 62 with an essential trapezoidal shape. The shape here and in other places of this application denotes the cross section as seen in this FIG. It has a base side 60 which preferably is longer than a top side 70. Base side 60 and top side 70 are aligned in parallel. Connected with bottom part 62 is a top part 76 of tread wear indicator 50 which has an essentially rectangular shape. Top part 76 reaches radially outwards through tread 6 to the surface 80 of tread 2. Top part 76 and bottom part 62 are both electrically conductive and are directly connected with each other. Preferably, no other layer or materal is arranged between top 76 and bottom part 62. Preferably, during manufacturing of tread wear indicator 50, both parts 62, 76 are extruded in a same production step.

Bottom part 62 is made of an electrically conductive material. In the present preferred embodiment, it is made of a material which is described in the following and which is a colored, conductive compound. The filler characteristics of the material preferably comprise pigments. The material is preferably permanently conductive and resistant to acids and alkalis. Its further characteristics are given in the following table:

| Compound formulation | Parts Per Hundred Rubber (PHR) |
|---|---|
| NR - Natural Rubber | 20 - 80 |
| PBD - Polybutadiene | 20 - 80 |
| Filler - Color Pigment, e.g. Red | 15 - 75 |
| Formaldehyd - Resin | 1 - 6 |
| Non-staining antioxydants | 2 - 12 |
| Vulcanization system | Sulphur Sulfenamide |

The invention also relates to a compound for a tire tread. The compound preferably is a colored, conductive compound comprising filler characteristics with pigments. The compound preferably comprises the properties as specified in the table above.

Bottom part 62 is in electric contact with belt structure 10 or optionally with an additional textile layer 4. Top part 76 is also made of an electrically conductive material. In the present preferred embodiment, it is made of the same material as the bottom part 62 except that the top part has essentially the color of the tread 6 while bottom part 62 has a color, especially red, which is clearly distinguishable from the tread color. Electrical charges with gather on belt structure 10 or optionally on a textile layer 4 are transported through bottom part 62 and top part 76 to the surface 80 of tread 2 and are then moved to the road surface. In this way, a large buildup of charges on the tire or rim is prevented which could otherwise affect the electric performance or functionality of the electric system of the corresponding vehicle.

The bottom part 62 radially extends from the belt structure 10 radially outwards into tread 6 up to a specified radial distance d indicated by a dashed-dotted line 86.

The bottom part 62 radially extends from the belt structure 10 or optional from an additional textile layer 4 outwards into tread 6 to a height of the dashed - dotted line 86. The height of these dashed - dotted line does correspond to the Tread Wear Indicator (TWI). The distance d is chosen preferably to correspond to a minimum thickness of the tread and/or minimum groove depth which is admissible by law and/or driving/handling properties of the tire. A line 90 in the FIGs. indicates a minimally required profile depth. The tread wear indicator 50 is preferably built in such a way that when it becomes visible when the profile depth corresponds to the line 90. Preferably, the bottom part 62 is built in such a way that it becomes visible when the profile depth corresponds to the line 90.

Bottom part 62 of tread wear indicator 50 has a color different from the color of the adjacent or surrounding tread 6. The top part 76 in a preferred embodiment has black color and/or the color of the material of the surrounding tread. In this variant, its function is only discharging the tread 2. Bottom part 62 has a color different from the color of the adjacent or surrounding tread 6. This color difference is realized in such a way that it is easily distinguishable by the naked eye. The top part 76 and bottom part 62 preferably have different colors, by which it can be recognized when the thickness of tread 6 is reaching a critical regime corresponding to distance d. For instance, the color of the top part can by green or yellow, and the color of the bottom part 62 can be red.

The top part 76 can in another preferred embodiment have a color different from the tread color, for instance the color green. Since already in the unworn state and/or slightly worn state of tread 6 the top part 76 is visible, the driver already at this stage can infer that the tire 2 comprises a tread wear indicator 50. Especially a green color of top part 76 indicates that the groove depth or tread depth is still admissible. When the tread 6 has worn considerably and the bottom part 62 is shown, which is preferably red, the driver obtains a clear signal that the tire 2 is not admissible anymore and needs to be replaced.

Top part 76 and bottom part 62 both are made of material which is electrically conductive. This in the unworn state and/or slightly worn state of the tire 2 until the tread is worn up to distance d, electrical charges that build up in the tire 2 can be lead off to the road.

Tread wear indicator 50 is arranged in rib 32. The tread wear indicators 56, 58 are arranged, respectively, in a shoulder block 6, 26. The tread wear indicators 56, 58 preferably comprise a trapezoidal bottom part 62 such as tread wear indicator 50, but no top part 76. These tread wear indicators 56, 58 become visible once distance d has been reached. Tread wear indicators 56, 58 are made of a rubber compound described above.

As long as the tread 6 has not reached distance d, top part 76 is visible, signaling to the driver that the tire tread 6 is still admissible. Once the wear has progressed up to distance d, all three tread wear indicators 50, 56, 58 become visible. Therefore three visible strips indicate to the driver that the tire 2 needs to be replaced.

The distribution of several tread wear indicators 50, 56, 58 along the tire tread 6 is advantageous since the wear of the tire 2 is usually inhomogeneous, therefore it is probable that one of bottom parts 76 is visible earlier than the other bottom parts 76.With each bottom part 76 of tread wear indicators 56, 58 reaching the worn surface of tread 6, the electric discharge ability of the tread 6 is increased. Tread wear indicators 56 and 58 are essentially built as the bottom part 76.

A second preferred embodiment of a tire 2 is shown in FIG. 2. It comprises a tire tread 6, a belt structure 10, a carcass 14 and optionally an additional textile layer 4 which is arranged between belt structure 10 and tread 2. The textile layer 4 comprises an electrically conductive compound.

Tread 2 comprises two shoulder blocks 20, 26 and two ribs 32, 36. Between shoulder block 20 and rib 32, a first groove 40 is formed. Between ribs 32, 36, a second groove 44 is formed. Between rib 36 and shoulder block 26, a third groove 48 is formed.

A first tread wear indicator 100 is arranged in shoulder block 20, a second tread wear indicator 102 is arranged in rib 36, and a third tread wear indicator 104 is arranged in shoulder block 26. Tread wear indicator 100 comprises a bottom part 62 and a top part 76. The bottom part 62 has a rectangular shape. It is in electrical contact with the belt structure 10 / textile layer 4 and with the top part 76 which has a rectangular shape. The colors of top part 76 and bottom part can be preferably be chosen as discussed in connection with FIG. 1.

A third preferred embodiment of a tire 2 is shown in FIG. 3. It comprises a tire tread 6, a belt structure 10 and a carcass 14. Tread 2 comprises two shoulder blocks 20, 26 and two ribs 32, 36. Between shoulder block 20 and rib 32, a first groove 40 is formed. Between ribs 32, 36, a second groove 44 is formed. Between rib 36 and shoulder block 26, a third groove 48 is formed. Bottom part 62 has an essentially ellipsoidal shape. For the tread wear indicators 130, 132, 134, 136, the colors of top part 76 and bottom part can be preferably be chosen as discussed in connection with FIG. 1. Bottom parts of these tread wear indicators 130, 132, 134, 136 have, respectively, the shape of an ellipse which is cut in half.

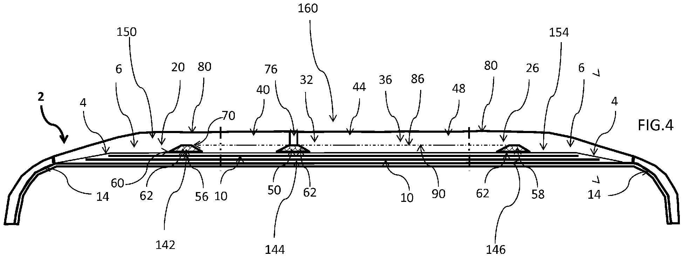

In FIG. 4, a fourth preferred embodiment of a tire 2 is shown. In contrast to the embodiments shown in FIGs. 1-3, the tread 6 does not comprise grooves. Instead, the tread 6 preferably comprises patterns, especially of recesses (not shown). The tread 6 comprises two shoulder blocks 150, 152 which comprise the respective outer regions of the tread 6 which, when looking from the middle of the cut shown, are the regions with the inclined tread 6 surface which connects to the part 160 which has, with exceptions of possible patterns, a straight surface. Tread wear indicators 142, 144, 146 are built as described above.

In each of the embodiments shown, the tire tread 6 comprises at least one layer. Preferably, tread 6 comprises at least two or three layers. A radially most outer layer is preferably built of a material which is optimized for high grip. The radially most outer layer preferably provides all or the major part of the tread surface. A radially more inner layer, which in some regions can reach through the outer layer to the surface, is preferably optimized for wear resistance. Tread 6 can also comprise a third and radially most inner layer or base layer. The belt structure is preferably made of steel.

Since the respective tread wear indicator is designed to dissipate charges, it is located at least in the radially innermost layer of tread 6 and can radially extend in radially more outer layers.

Tire tread 6 can comprise wings which are preferably made of the same material as the sidewall of the tire 2. Grooves can have trapezoidal shapes as shown in the FIGs. or other shapes, such as V-shapes.

The invention thus conceived can be subjected to numerous modifications and variants all falling within the scope of the inventive concept. In addition, all details can be replaced by other technically equivalent elements. In practice, all the materials used, as well as the shapes and contingent dimensions, may vary depending on the requirements without departing from the scope of protection of the claims.

## Claims

1. Pneumatic tire (2), comprising a tread (6) with at least one layer with a tread color, a belt structure (10) and a carcass (14), further comprising at least one tread wear indicator (50, 56, 58, 100, 102, 104, 130, 132, 134), **characterized in that**
said at least one tread wear indicator (50, 56, 58, 100, 102, 104, 130, 132, 134) has at least partially a different tread wear indicator color than the surrounding tread (6) and extends radially outwards from said belt structure (10) or from a textile layer (4) into said tread (6), whereby said tread wear indicator (50, 56, 58, 100, 102, 104, 130, 132, 134) is at least partially built of an electrically conducting material.

2. Pneumatic tire (2) according to claim 1, whereby said tire tread indicator (50, 56, 58, 100, 102, 104, 130, 132, 134) extends from said belt structure (10) or from a textile layer (4) to the surface (80) of said tread (6).

3. Pneumatic tire (2) according to claim 1 or 2, whereby said tread wear indicator (50, 56, 58, 100, 102, 104, 130, 132, 134) comprises a bottom part (62) radially extending from said belt structure (10) or from an textile layer (4) into said tread (6) and a top part (76) extending from said bottom part (62) radially further into said tread (6).

4. Pneumatic tire (2) according to claim 3, whereby said bottom part (62) has an essentially trapezoidal shape.

5. Pneumatic tire (2) according to claim 3, whereby said bottom part (62) has an essentially rectangular shape.

6. Pneumatic tire (2) according to claim 3, whereby said bottom part (62) has an essentially ellipsoidal shape.

7. Pneumatic tire (2), according to one of the claims 3 to 6, whereby said top part (76) has an essentially rectangular shape.

8. Pneumatic tire (2) according to one of the claims 1 to 7, whereby said tread color is essentially black

9. Pneumatic tire (2) according to one of the claims 1 to 8, whereby said tread wear indicator (50, 56, 58, 100, 102, 104, 130, 132, 134) has a tread wear indicator color which is easily distinguishable from said tread color.

10. Pneumatic tire (2) according one of the claims 1 to 9, whereby said tread wear indicator color is of the group: yellow, orange, red.

11. Pneumatic tire (2) according to one of the claims 1 to 10, whereby said tread wear indicator (50, 56, 58, 100, 102, 104, 130, 132, 134) has a width of 1-10 mm, especially 2-5 mm.

12. Pneumatic tire (2) according to one of the claims 1 to 11, whereby said tread wear indicator (50, 56, 58, 100, 102, 104, 130, 132, 134) is essentially made of a material which is a colored, conductive compound comprising filler characteristics with pigments.

13. Pneumatic tire (2) according to one of the claims 1 to 12, with at least one rib (32, 36) in said tread (6), whereby said tread wear indicator (50, 56, 58, 100, 102, 104, 130, 132, 134) is arranged in said rib (32, 36).

14. Pneumatic tire (2) according to one of the claims 1 to 13, with at least one shoulder block (20, 26) in said tread (6), whereby said tread wear indicator (50, 56, 58, 100, 102, 104, 130, 132, 134) is arranged in said shoulder block (20, 26).

15. Pneumatic tire (2) according to one of the claims 1 to 14, whereby said tread (6) comprises at least two layers.

## Amended claims

### Amended claims in accordance with Rule 137(2) EPC.

1. Pneumatic tire (2), comprising a tread (6) with at least one layer with a tread color, a belt structure (10) and a carcass (14), further comprising at least one tread wear indicator (50, 56, 58, 100, 102, 104, 130, 132, 134),
**characterized in that**
said at least one tread wear indicator (50, 56, 58, 100, 102, 104, 130, 132, 134) has at least partially a different tread wear indicator color than the surrounding tread (6) and extends radially outwards from said belt structure (10) or from a textile layer (4) into said tread (6), whereby said tread wear indicator (50, 56, 58, 100, 102, 104, 130, 132, 134) is at least partially built of an electrically conducting material with maximal resistance of 10⁸ Ω, and whereby said tread wear indicator (50, 56, 58, 100, 102, 104, 130, 132, 134) comprises a bottom part (62) radially extending from said belt structure (10) or from an textile layer (4) into said tread (6) and a top part (76) extending from said bottom part (62) radially further into said tread (6), and whereby said top part (76) and said bottom part (62) have different colors.

2. Pneumatic tire (2) according to claim 1, whereby said tire tread indicator (50, 56, 58, 100, 102, 104, 130, 132, 134) extends from said belt structure (10) or from a textile layer (4) to the surface (80) of said tread (6) in an unworn state of the tire (2).

3. Pneumatic tire (2) according to claim 1 or 2, whereby said bottom part (62) has an essentially trapezoidal shape.

4. Pneumatic tire (2) according to claim 1 or 2, whereby said bottom part (62) has an essentially rectangular shape.

5. Pneumatic tire (2) according to claim 1 or 2, whereby said bottom part (62) has an essentially ellipsoidal shape.

6. Pneumatic tire (2), according to one of the claims 1 to 5, whereby said top part (76) has an essentially rectangular shape.

7. Pneumatic tire (2) according to one of the claims 1 to 6, whereby said tread color is essentially black

8. Pneumatic tire (2) according to one of the claims 1 to 7, whereby said tread wear indicator (50, 56, 58, 100, 102, 104, 130, 132, 134) has a tread wear indicator color which is easily distinguishable from said tread color.

9. Pneumatic tire (2) according one of the claims 1 to 8, whereby said top part (76) has a green color and/or said bottom part (62) has a red color.

10. Pneumatic tire (2) according to one of the claims 1 to 9, whereby said tread wear indicator (50, 56, 58, 100, 102, 104, 130, 132, 134) has a width of 1-10 mm, especially 2-5 mm.

11. Pneumatic tire (2) according to one of the claims 1 to 10, whereby said tread wear indicator (50, 56, 58, 100, 102, 104, 130, 132, 134) is essentially made of a material which is a colored, conductive compound comprising filler characteristics with pigments.

12. Pneumatic tire (2) according to one of the claims 1 to 11, with at least one rib (32, 36) in said tread (6), whereby said tread wear indicator (50, 56, 58, 100, 102, 104, 130, 132, 134) is arranged in said rib (32, 36).

13. Pneumatic tire (2) according to one of the claims 1 to 12, with at least one shoulder block (20, 26) in said tread (6), whereby said tread wear indicator (50, 56, 58, 100, 102, 104, 130, 132, 134) is arranged in said shoulder block (20, 26).

14. Pneumatic tire (2) according to one of the claims 1 to 13, whereby said tread (6) comprises at least two layers.
